# EUROPÄISCHE PATENTSCHRIFT

(11) **EP 0 680 452 B1**
(45) Veröffentlichungstag und Bekanntmachung des Hinweises auf die Patenterteilung: **26.03.1997**
(21) Anmeldenummer: 94904126.3
(22) Anmeldetag: 07.01.1994
(51) Int. Cl.: B65D 90/40, F17C 13/12, B60P 3/22

(54) **SICHERHEITSBEHÄLTER FÜR EXPLOSIONS- UND/ODER UMWELTGEFÄHRDENDE STOFFE**
SAFETY CONTAINER FOR POTENTIALLY EXPLOSIVE AND/OR ENVIRONMENTALLY HAZARDOUS SUBSTANCES
CUVE DE SECURITE POUR MATIERES EXPLOSIVES ET/OU POLLUANTES

(30) Priorität: 23.01.1993 DE 4301797; 23.01.1993 DE 4301798; 23.01.1993 DE 4301838; 23.01.1993 DE 4301839; 23.07.1993 DE 4324726; 28.07.1993 DE 4325219; 31.07.1993 DE 4325807; 02.08.1993 DE 4325884
(43) Veröffentlichungstag der Anmeldung: 08.11.1995
(73) Patentinhaber: Schiwek, Helmut, D-47057 Duisburg (DE)
(72) Erfinder: Schiwek, Helmut, D-47057 Duisburg (DE)
(74) Vertreter: Schulte, Jörg, Dipl.-Ing.
(86) Internationale Anmeldenummer: DE9400009
(87) Internationale Veröffentlichungsnummer: WO9416972

(56) Entgegenhaltungen:
- CA-A- 1 104 074
- DE-C- 680 737
- FR-A- 2 122 792
- FR-A- 2 129 815

## Beschreibung

Die Erfindung betrifft einen Sicherheitsbehälter für die Lagerung und den Transport umweltgefährdender, insbesondere explosionsgefährlicher Stoffe wie Benzin, Öl, Wasserstoff und sonstige Kraftstoffe, gemäß dem Oberbegriff des Anspruchs 1.

Derartige Behälter und insbesondere auf Fahrzeuge oder in Fahrzeugen transportierte Sicherheitsbehälter sind grundsätzlich aus der DE-C-680 737 (D1) bekannt. Sie müssen seit den 1976 bestehenden gesetzlichen Bestimmungen in der Bundesrepublik Deutschland dann mit Warntafeln gekennzeichnet sein, wenn sie gefährliche Güter enthalten. Wesentlicher Grund hierfür ist, daß die in diesen meist als Tankfahrzeugen oder Sicherheitsfahrzeugen transportierten gefährlichen Güter wie Benzin und Öl bei einem Unfall des Fahrzeugs oder bei einem Undichtwerden des Sicherheitsbehälters die Umwelt, vor allem das Grundwasser erheblich beeinträchtigen können. Außerdem kann das auslaufende Benzin brennen und ggf. sogar zu einer Explosion führen. Insbesondere wegen der erheblichen mit derartigen Tankfahrzeugen transportierten Mengen sind daher besondere Sicherheitsmaßnahmen erforderlich. Als Explosionssicherung wird in der DE-C-680 737 (D1) eine Füllung aus Glaswolle vorgeschlagen. Die Glaswolle ist in aus Draht bestehende Zellen angeordnet. Von daher ist eine Handhabung schwierig und bei den heutigen Bestimmungen auch nicht zugelassen, weil die losen Glasfasern eine Gefährdung für die Beschäftigten darstellt und dann Einsatz von empfindlichen Pumpen u. ä. nicht ermöglicht. Tankfahrzeuge mit 35 000 1 Inhalt und mehr müssen auch Straßen befahren, die nicht in einwandfreiem Zustand sind bzw. die nicht einmal befestigt sind. Dabei gerät der Inhalt des Behälters, insbesondere wenn der Behälter nicht zu 100 % gefüllt ist, in Schwankungen, die die Fahrsicherheit des Fahrzeuges wesentlich beeinträchtigen können. Um diese Schaukelbewegung zu verhindern, ist es bekannt, solche Behälter mit Einbauten, d. h. insbesondere sogenannten Schwallwänden zu versehen. Nachteilig bei diesen Schwallwänden ist, daß sie entweder in sehr kurzem Abstand angeordnet werden müssen oder aber eine zu ungenügende Wirkung entfalten. Darüber hinaus sind diese Sicherheitsbehälter, wenn sie Benzin o. ä. Kohlenwasserstoffe enthalten aber gleichzeitig - wie schon erwähnt - explosionsgefährdet, sobald nämlich das auslaufende Transportgut mit Feuer in Verbindung kommt. Ungebundene Glaswolle kann da nur ungenügend helfen, weil ein Auslaufen der Flüssigkeit nicht mit der notwendigen Sicherheit verhindert werden kann. Gleiches gilt für Luftfahrzeuge und insbesondere auch für Tanker, wobei letztere bei den heute enorm großen Transportvolumen bei Beschädigungen zu riesigen Umweltkatastrophen führen.

Der Erfindung liegt daher die Aufgabe zugrunde, eine Sicherheitsausrüstung für Gefahrengutbehälter insbesondere auch für Flugzeuge, Schiffe, Tankwagen und dergleichen zu schaffen, die ohne aufwendigen Aufbau und Ausbau zur notwendigen Sicherheit gegen Auslaufen und Explosion des Transportgutes beiträgt bzw. eine solche garantiert.

Die Aufgabe wird erfindungsgemäß durch die Merkmale des Kennzeichenden Teils des Anspruchs 1 gelöst.

Bei einem derart ausgebildeten Sicherheitsbehälter kann aufgrund des den Behälter ausfüllenden mattenförmigen Gitterwerkes eine Schaukelbewegung erst gar nicht entstehen. Vielmehr wird mit dem Einfüllen des Gefahrengutes dieses quasi in das Gitterwerk eingebettet, so daß es dann im wesentlichen nur noch die Bewegungen mit ausführt, die das Fahrzeug bzw. der entsprechende Behälter vorgibt, ohne daß die beschriebenen Schaukelbewegungen auftreten könne. Darüber hinaus hat die erfindungsgemäße Ausbildung den großen Vorteil, daß bei einem Undichtwerden oder gar bei einem Unfall mit dem Behälter das Gefahrengut nicht austreten kann, weil es nämlich in dem mattenförmigen Gitterwerk zurückgehalten wird. Damit ist eine Gefährdung der Umwelt durch auslaufendes Öl oder auslaufendes Benzin o. ä. Gefahrengüter ausgeschlossen. Die erfindungsgemäße Lösung erbringt damit einen Mehrfacheffekt, der die Betriebs- und Fahrsicherheit eines derartigen Behälters insbesondere Tankfahrzeuges sichert. Das Gitterwerk als solches ist so in das Behälterinnere eingebracht, daß es dieses annähernd ausfüllt. Überraschend dabei ist, daß trotz des eingefüllten, aus ganz dünnen Glasfasern bestehende Gitterwerkes dennoch nur ein geringer Volumenverlust auftritt. Das in das Behälterinnere eingelaufene Transport- und Gefahrengut wird am Zielort durch Druckluft o. ä. aus dem Gitterwerk herausgepreßt, so daß das Fahrzeug dann anschließend wieder für den Transport eines entsprechenden Gefahrengutes zur Verfügung steht. Ein Auswechseln der Behälterfüllung, d. h. des Gitterwerkes ist dabei nicht erforderlich. Selbst dann, wenn ein mit dem ursprünglich transportierten Gefahrengut nicht identisches Gefahrengut transportiert werden soll, braucht dieses lediglich durch geeignete Maßnahmen nur ausgewaschen zu werden, ohne daß ein Austausch erforderlich wird. Gemäß der nachfolgend beschriebenen Ausführungen ist aber auch ein Austausch problemlos möglich, wenn dies aus irgendwelchen Gründen erforderlich werden sollte.

Um ein Verrutschen des in das Behälterinnere eingebrachten Gitterwerkes zu verhindern, ist erfindungsgemäß vorgesehen, daß das mattenartige Gitterwerk in das Behälterinnere eingespannt oder sich an dort positionierten aus Stäben oder aus Glasfasersträngen oder -wänden bestehenden Stützen abstützend eingebracht und angeordnet ist. Diese Glasfaserstränge oder -wände haben den Vorteil, daß sie das Diffundieren des Gefahrengutes nicht behindern, so daß jeweils entsprechend große Behälter für den Transport solcher Gefahrengüter zur Verfügung stehen. Es versteht sich, daß damit aber auch die Möglichkeit besteht, bei Bedarf einen solchen Behälter, beispielsweise Tankbehälter in Teilbehälter durch entsprechend eingebrachte bzw. vorgesehene Zwischenwände zu unterteilen.

Weiter vorne ist bereits darauf hingewiesen worden, daß zum Entleeren derartiger Sicherheitsbehälter Druckluft zum Einsatz kommen kann. Entsprechend sieht die Erfindung vor, daß das Behälterinnere über die Befüll- und Entleerungseinrichtungen mit einem Druckluftanschluß oder Inertgasanschluß bzw. Inertgasbehälter verbunden ist. Die eingeleitete Druckluft drückt das Gefahrengut aus dem mattenförmigen Gitterwerk heraus, ohne daß nennenswerte Rückstände verbleiben. Wird ein beispielsweise mit Sauerstoff reagierendes Gefahrengut im Behälter transportiert, ist es vorteilhaft, wenn statt der Druckluft Inertgas Verwendung findet, wozu gemäß der Erfindung ein entsprechender Inertgasbehälter oder zumindest Inertgasanschluß vorgesehen ist. Der Inertgasbehälter kann im Fahrzeug untergebracht sein, weil er mit dem Einfüllen des Gefahrengutes automatisch wieder das Inertgas aufnehmen kann, um dann anschließend wieder für die Rückgewinnung des Gefahrengutes zu sorgen. Der notwendige Druck wird dabei erzeugt, indem auch das Gefahrengut mit Druck in den Behälter eingebracht wird. Denkbar ist es aber auch, jeweils neues Inertgas für den Entleerungsvorgang einzusetzen. Außerdem können, die durch Verdunsten des Benzins freiwerdenden Benzindämpfe gesammelt und zum "Ausdrücken" des Benzins eingesetzt werden.

Eine möglichst optimale Ausfüllung des Gefahrengutbehälters bzw. Sicherheitsbehälters wird erreicht, indem die das Gitterwerk bildende Glaswolle mit 7 - 10 Gew.-% Bindemittel aus Silikon und Stärke oder Epoxyharz beschichtet und zu Platten oder Körpern mit einer Raumdichte (Rohdichte) von 18 bis 110 kg/m³, vorzugsweise 40 - 65 kg/m³ geformt ist. Der Vorteil bei entsprechend ausgebildeten Körpern ist, daß diese sicher in den Behälter eingeschoben werden können und in der Regel auch ohne ein Stützwerk auskommen. Da das Gitterwerk den Abmessungen des Behälterinneren entsprechend abgelenkt und geschnitten ist, kann sichergestellt werden, daß das mattenförmige Gitterwerk auch den gesamten Hohlraum eines solchen Behälters ausfüllt. Die entsprechend beschichtete Glaswolle kann das Gefahrengut wie Öl und Benzin aufnehmen und lagern, wobei die zum Einsatz kommenden Komponenten des Bindemittels eine innige Verbindung eingehen, so daß sie weder durch Öl oder Benzin oder andere Gefahrenstoffe aufgelöst werden können. Damit ist eine hohe Speicherfähigkeit des mattenförmigen Gitterwerkes auf Dauer gewährleistet und wie schon erwähnt sichergestellt, daß der Gefahrenstoff bei Beschädigungen des Behälters praktisch nicht austreten kann.

Die hohe Speicherfähigkeit wird insbesondere dadurch gewährleistet, daß die das Gitterwerk bildende Glaswolle von Glasfasern (Weichglaswolle) mit einem Faserdurchmesser von 3 - 7 µm besteht und daß das Gitterwerk zusammen mit den teleskopierbar ausgebildeten Stützen und diesen zugeordneten Fußplatten in das Behälterinnere eingeschoben ist. Letzteres ist vorgesehen, um bei insbesondere geringeren Raumdichten dem Gesamtgitterwerk die notwendige Stabilität zu geben. Dabei können diese Stützen gleichzeitig auch dazu benutzt werden, Druckluft verteilt in den Behälter einzubringen, um auf diese Art und Weise das Ablaufen bzw. Entleeren des Sicherheitsbehälters zu beschleunigen. Neben Silikon und Stärke ist es auch möglich, Mischungen aus Silikonharzen und Latex o. ä. Bestandteilen als Bindemittel für das mattenförmige Gitterwerk zu verwenden, wobei diese Stoffe vorteilhaft umweltverträglich sind und die geschilderten Speichereigenschaften des mattenförmigen Gitterwerkes sicherstellen. Die an den Behälterinnenwänden anliegenden Fußplatten an den Stützen sind vorgesehen, um das Einschieben eines durchgehenden Stützgerüstes zu erleichtern. Dieses Stützgerüst verhindert dabei vorteilhaft auch bei extremen Bewegungen eine Schaukelbewegung des eingefüllten Gefahrengutes.

Um das Einbringen der Glaswolle bzw. der Glasfasern in derartige Behälter zu erleichtern, kann es vorteilhaft sein, wenn die Glaswolle und damit die sie bildenden Glasfasern paketweise mit einem dünnen Glasflies oder aus Glasfasern bestehenden Bändern umgeben sind, wobei als Bindemittelzusatz Silan dem Epoxyharz oder gleich oder ähnlich wirkendem Harz zugegeben ist. Das Silan wirkt als Katalysator auf die organischen und anorganischen Bestandteile der Emulsion. Die Umhüllung mit Glasflies oder die Zuordnung entsprechender Bänder erweitert den Verwendungsbereich derartiger Sicherheitsbehälterfüllungen.

Dort wo beispielsweise Flüssiggas transportiert und gelagert werden soll, kann es zweckmäßig sein, sogar innerhalb der in den Behälter eingeschobenen Glaswollekörper unterschiedliche Rohdichten vorzugeben, wobei insbesondere für Flüssiggas vorgesehen ist, daß das Behälterinnere von außen nach innen mit Gitterwerkslagen sich verringernder Raumdichte (Rohdichte) gefüllt ist. Im Außenbereich ist eine besonders dichte Matte vorgesehen, die das Eindringen des Sauerstoffs wesentlich erschwert und dafür Sorge trägt, daß auch bei Unglücksfällen problematische Situationen ausgeschlossen bleiben, wodurch das Flüssiggas auch auf Dauer flüssig gehalten werden kann.

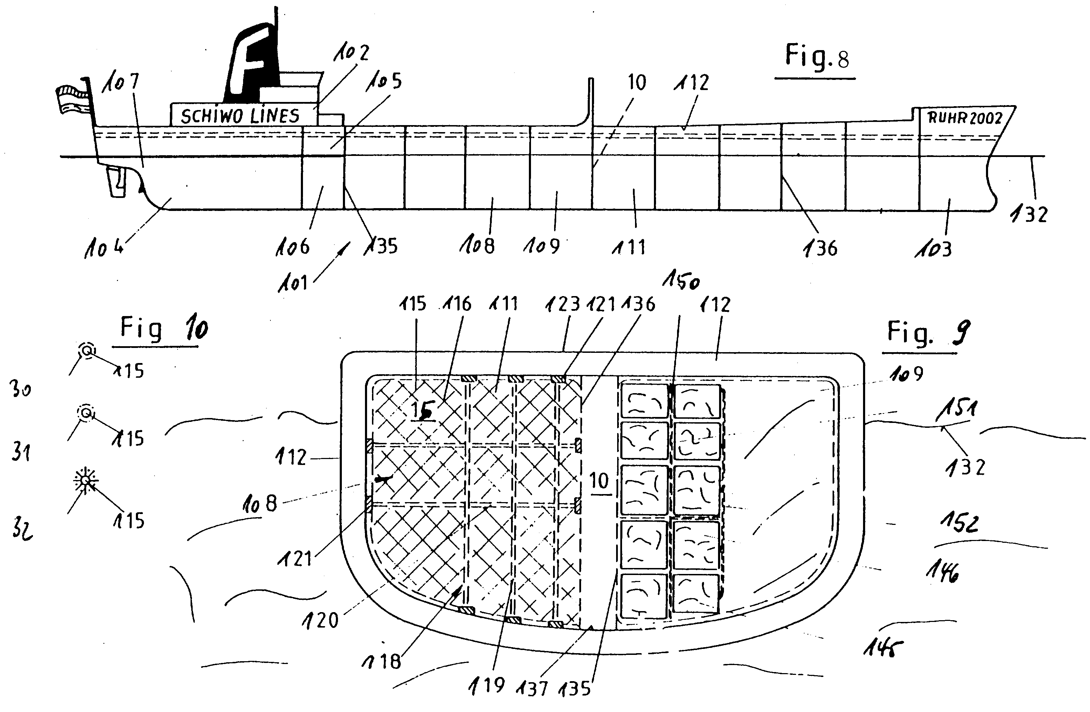

Insbesondere für Öltanker u. ä. Schiffe gemäß Fig. 8 ist es von Vorteil, wenn das Behälterinnere von Abteiltankräume und Betriebsöltanks sowie Kofferdämme oder als Doppelwände ausgeführten Zwischenwände und der Boden einer Bilsch mit dem mattenförmigen Gitterwerk aus entsprechend ausgebildeter und beschichteter Glaswolle ausgefüllt ist. Bei einem derart ausgebildeten Schiff kann aufgrund des die einzelnen Tanks und Hohlräume ausfüllenden mattenförmigen Gittergerüstes eine Schaukelbewegung des flüssigen Inhaltes nicht entstehen und kann ein unbeabsichtigtes Austreten vor allem annähernd als ausgeschlossen angesehen werden und zwar auch dann, wenn die Außenwand beschädigt wird. Grund hierfür ist die den Hohlraum ausfüllende Glaswolle bzw. das entsprechend mattenförmige Gitterwerk, das das Öl und die ähnlich flüssigen Produkte auffängt und aufnimmt und nur unter Beaufschlagung besonderer Druckmittel beispielsweise Druckluft wieder freigibt. Damit ist überraschend sichergestellt, daß das insbesondere in Öltankern transportierte Öl und ähnliche Kohlenwasserstoffe nicht in die Umwelt austreten, wenn der Öltanker beschädigt wird. Überraschend ist letztlich mit dieser besonderen Ausbildung der Abteiltankräume bzw. des ganzen Schiffes eine Schwimmhilfe für derartige Schiffe erreicht, die selbst bei aufgetretenen Kollisionen nicht untergehen können, weil das durch das mattenförmige Gitterwerk festgehaltene Öl oder die sonstigen Kraftstoffe zusammen mit diesem Gitterwerk als Schwimmhilfe wirken. Dabei erhöht sich natürlich das Leergewicht eines Tankers oder sonstigen Schiffes durch die eingebrachte Glaswolle, doch in einem durchaus vertretbaren Maß, wobei dieser Nachteil mehr als dadurch aufgefangen wird, daß die transportierten flüssigen Produkte nicht auslaufen können. Für die Beladung und Entladung der Öltanker aber auch einzelner Öltanks auf Frachtschiffen sind Pump-Anlagen, d. h. also Be- und Entladeeinrichtungen vorgesehen. Diese Be- und Entladeeinrichtungen-können so beaufschlagt werden, daß sie beispielsweise beim Entladen eines Tanks Druckluft o. ä. in den Tank eindrücken, um auf der anderen Seite das Öl oder das sonstige Produkt herauszudrücken. Mit dem Einpumpen des Öls beim Befüllen des jeweiligen Tanks wird dann gleichzeitig die darin enthaltende Druckluft entlassen, so daß eine sehr gleichmäßige und ruhige Befüllung eines Öltanks gewährleistet ist.

Zum schnelleren Entleeren derartiger Tanks ist es von Vorteil, wenn die Stützen als Rohre ausgebildet, mit Querbohrungen versehen und mit der Befüll- und Entleerungseinrichtung verbunden sind. Damit ist die Möglichkeit gegeben, die einzelnen Tanks jeweils gezielt schneller zu entleeren oder aber auch mehrere Tanks gleichzeitig zu entleeren, je nachdem wie sich dies als zweckmäßig und notwendig ergibt.

Öltanker, die trotz der in den Tanks eingefüllten Gittermatten aus Galsfasern Öl verlieren, können Umweltschäden dann nicht verursachen, wenn sie eine Schiffswand aufweisen, in der über nach außen zu öffnende Klappen verschlossene Barrierekammern angeordnet sind, in denen eine Schleudereinrichtung und eine Ölbarriere untergebracht ist, die aus zu Rollgitterglasmatten geformtem Gitterwerk besteht. Dieses Gitterwerk bzw. die Rollgitterglasmatten können mit einem Mantel aus Glasfasergewebe versehen sein, um das Material besser herausschleudern zu können und dabei ein Abreißen sicher zu verhindern. Außerdem können die Ölbarrieren dann leichter wieder zurückgewonnen werden. Die Glasfaserumhüllung läßt das Öl hindurchtreten, insbesondere dann, wenn es in gewissen Abständen mit Ausnehmungen bzw. Löchern versehen ist.

Das Einfüllen des Gitterwerkes wird dadurch beschleunigt, daß die einzelnen Tanks eines Schiffes gemäß Fig. 11 mit Paketen aus Glasfasern gefüllt sind und daß zusätzlich auch im die Tanks umgebenden Kühlmantel Matten aus Glasfasern angeordnet sind. Bei letzterem handelt es sich um eine besondere Ausführung insofern, als mit derartigen Tankern auch Flüssiggas und insbesondere Wasserstoff transportiert werden kann, ohne daß die Gefahr besteht, daß dieses Gefahrengut austreten kann. Gleichzeitig ist durch das eingefüllte Gitterwerk ein ruhiger Transport erreicht, ohne daß Schwallwände o. ä. eingebracht werden müssen. Die zusätzliche Anordnung der Glasfasermatten auch im Kühlmantel ermöglicht das bessere Halten des Kühlmittels, so daß hier auch Material eingesetzt werden kann, daß bei guten Eigenschaften zum Brennen neigt, so daß der Einsatz von Kühlmitteln im weiteren Rahmen bei solchen Tanks und Tanker möglich ist. Das hier zum Einsatz kommende Gitterwerk erbringt somit einen weiteren Doppeleffekt, insofern als das es einmal zum besseren Halten des Kühlmittels und des Gefahrengutes beiträgt, gleichzeitig aber auch den Einsatz von preiswerteren und optimaleren Kühlmitteln ermöglicht.

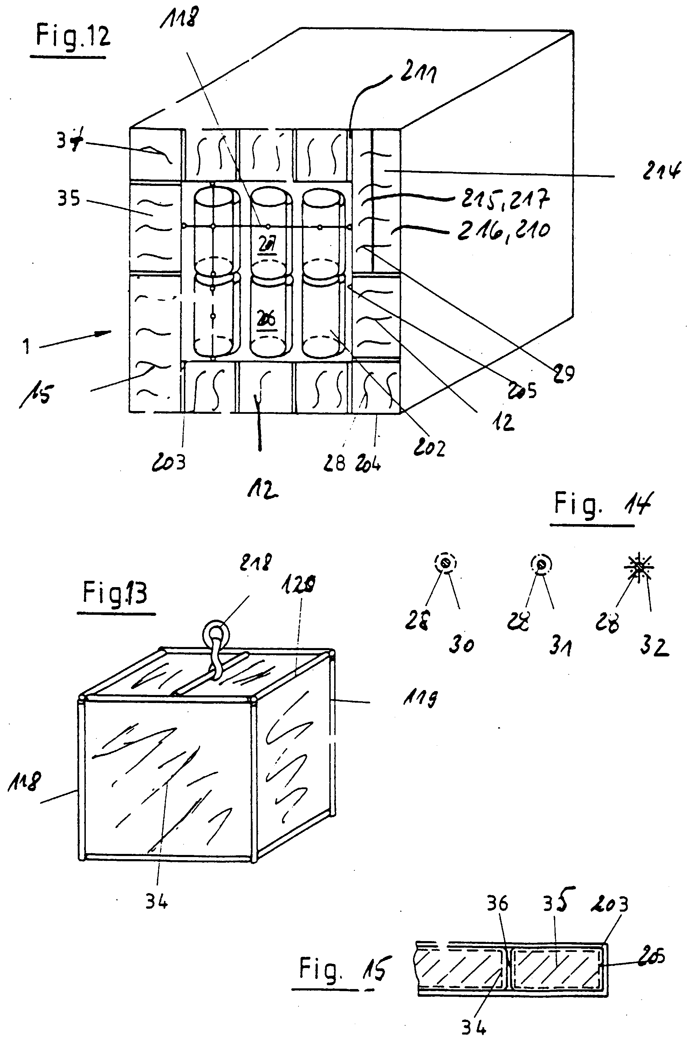

Für den Transport von festem Gefahrengut oder in kleineren Behältnissen wie beispielsweise Fässern abgefüllten Gefahrengutes ist eine Lösung vorgesehen, nach der das mit Gefahrengut ganz oder teilweise ausgefüllte Behälterinnere eines Behälters gemäß Fig. 12 von einem Schutzmantel oder einem zusätzlichen Außenmantel umgeben ist, der aus dem Gitterwerk besteht oder dieses von einem Blech-, Kunststoff- oder Glasfasermantel umgeben beinhaltet ist, wobei der Mantel auf der Gefahrengutseite perforiert ist. Damit kann ein solches Gitterwerk eventuell auch austretendes Gefahrengut aufnehmen, ohne daß die Gefahr besteht, daß dieses in die Umwelt gelangt. Vorteilhaft ist dies insbesondere für den Transport von Chemikalien u. ä. Flüssigkeiten, die bei Beschädigungen des eigentlichen Behälters zum Austreten in die Umwelt geeignet sind. Auch hier sorgt die langkettige Stärke und das Silikonharz o. ä. Bindemittel dafür, daß auf Dauer die Chemikalien gebunden werden, so daß sie wie schon erwähnt nicht unbeabsichtigt austreten und in die Umwelt gelangen können. Über den außen angeordneten Blech- oder Kunststoffmantel kann die Stabilität des Gitterwerkes erhöht werden, wenn dieses nicht mit der notwendigen Stabilität ausgebildet ist oder ausgebildet werden soll. Neben der Stärke eignen sich auch verschiedene Harze zur Herstellung entsprechend hydrophoben Glasfasergemisches. Denkbar ist es auch, ein Glasfasergewebe hydrophil zu machen, um gezielt Wasser anzusaugen, so daß dieses nicht austreten kann. Dies ist beispielsweise von eminenter Wichtigkeit, wenn radioaktiv gewordenes Wasser oder eine ähnliche Flüssigkeit transportiert werden muß und wenn bei einem solchen Transport Undichtigkeiten zu befürchten sind.

Dort, wo unterschiedliche Schadstoffe transportiert werden oder wo zu unterschiedlichen Zeiten in den gleichen Behältern solche Gefahrengüter transportiert werden müssen, ist es von Vorteil, wenn der Schutz- oder Außenmantel eine Doppelkammer aufweist, wobei eine dem Gefahrengut zugewandte Kammer mit einem hydrophil gemachten Gitterwerk und die äußere Kammer mit einem hydrophob gemachten Gitterwerk gefüllt ist. Je nach Gefahrengut kann auch eine umgekehrte Anordnung vorgesehen werden, wobei je nach Ausbildung auch ein Austausch möglich ist, um auf diese Art und Weise mit einem und demselben Schutzmantel unterschiedlichste Gefahrengüter transportieren zu können. Das hydrohphile Gitterwerk beispielsweise sorgt dafür, daß wasserförmige Schadstoffe nicht in die Umwelt entweichen können, während eventuell mittransportiertes und mitanhaftendes weiteres Gefahrengut durch das Wasser hindurch in den äußeren Schutzmantel gelangen kann, um hier aufgenommen und gelagert bzw. gespeichert zu werden. Damit ist eine sehr vielseitig einsetzbare und sichernde Ausführung eines Schutzmantels vorgegeben, die darüber hinaus durch einen relativ einfachen Aufbau gekennzeichnet ist. Die Speicherfähigkeit des Gitterwerkes ist bekannt bzw. läßt sich berechnen, wobei immer ein mehrfaches des Gewichtes aufgenommen werden kann, wenn wie erfindungsgemäß vorgesehen, entsprechend dünne Glasfasern und entsprechend beschichtete Glasfasern zum Einsatz kommen. Dort, wo die Stabilität eines derartigen Gitterwerkes aus irgendwelchen Gründen nicht ausreicht, ist zusätzlich wie erwähnt zum Gitterwerk ein Traggerüst aus Rohren oder Doppelplatten vorzusehen, das an den wandseitigen Enden Führungsteile aufweist. Über diese Führungsteile kann das in das Gitterwerk integrierte Traggerüst komplett beispielsweise in einen entsprechenden Behälter eingeschoben werden, um hier dann die beschriebene Funktion zu erfüllen. Genau so gut kann auf diese Art und Weise das Gitterwerk in einen den Gefahrenraum umgebenden Mantel eingeschoben werden.

Bei modernen Verkehrsflugzeugen, insbesondere mit Düsenantrieb werden um diesen Luftfahrzeugen eine größere Reichweite zu geben, erhebliche Mengen an Treibstoff im Flugzeug selbst untergebracht. Bewährt hat sich dabei seit langem die Unterbringung aller wesentlichen Kraftstofftanks in den Flügeln. So werden etwa in den Flügeln mehr als 2/3 des benötigten Treibstoffes gelagert, während im dazwischen liegenden Teil des Rumpfes in der Regel weniger als 1/3 gespeichert wird. Um das Flugzeug dabei immer im Gleichgewicht zu halten, muß laufend zwischen den einzelnen Flügeltanks ein Ausgleich vorgenommen werden, so daß das ganze insgesamt sehr regelaufwendig ist. Zur Vermeidung dieses laufenden Austausches und um andererseits derartige Luftfahrzeuge sicherer zu gestalten, ist vorgesehen, daß das Behälterinnere eines Rumpftankes eines Flugzeuges gemäß Fig. 16, 17 sowohl in Richtung Cockpit wie auch in Richtung Heck verlängert und wie auch alle Flügeltanks mit dem mattenförmigen Gitterwerk aus entsprechend ausgebildeter und beschichteter Glaswolle ausgefüllt sind, die zwischen den Tankwänden mit einer Raumdichte von 45 - 55 kg/m³ eingespannt angeordnet ist. Schaukelbewegungen können so wiederum ausgeglichen werden und auch ein unbeabsichtigtes Austreten des Kerosins ist als annähernd ausgeschlossen anzusehen, weil die den Hohlraum ausfüllende Glaswolle bzw. das entsprechende mattenförmige Gitterwerk das Kerosin auffängt und aufnimmt und im wesentlichen nur unter Beaufschlagung beispielsweise durch Druckluft wieder freigibt. Damit ist zusätzlich überraschend sichergestellt, daß bei auftretenden Beeinträchtigungen eine eventueller Brand gehemmt und sogar eine Explosion so eingedämmt wird, daß wesentliche Beeinträchtigungen nicht zu befürchten sind. Hier wie auch bei den anderen Sicherheitsbehältern wird diese Explosionssicherheit dadurch erreicht, daß das Eindringen von Sauerstoff verhindert wird, so daß immer nur im Randbereich eine Beeinflussung auftreten kann. Besonders vorteilhaft ist für die Luftfahrzeuge, daß auf die zahlreichen Zwischenwände in den Tanks verzichtet werden kann, weil sich das Gitterwerk selbst an den Tankwänden abstützt und so eingespannt ist, daß es in dem Tank nicht hin- und herrutschen kann. Das Gewicht der die Tanks ausfüllenden Glaswolle erhöht zwar das Eigengewicht des Flugzeuges, wobei aber dieser Nachteil dadurch aufgefangen wird, daß auf die zahlreichen Zwischenwände und Überlaufrohre u. ä. verzichtet werden kann. Für die Beladung und Entladung der Tanks sind übliche Be- und Entladeeinrichtungen vorgesehen, wobei diese so beaufschlagt werden, daß sie beispielsweise beim Herauspumpen des Treibstoffs Druckluft o. ä. in den Tank eindrücken. Während beim umgekehrten Vorgang über die eingeleitete Druckluft das Kerosin herausgedrückt wird, wird beim umgekehrten Vorgang über das eingeleitete Kerosin die Druckluft herausgedrückt. Vorteilhaft ist außerdem, daß schon beim Einfüllen des Kerosins oder sonstigen Treibstoffes eine Vergleichmäßigung durch das eingefüllte Gitterwerk erfolgt, so daß ein kontinuierlicher Austausch wie bisher zwischen den einzelnen Tanks nicht erforderlich ist. Vorteilhaft ist außerdem, daß auf diese Art und Weise wesentlich mehr an Lagerraum bzw. Tankraum im Bereich des Rumpfes zur Verfügung steht, wodurch die schon beschriebenen aufwendigen Druck- und Gewichtsausgleiche zwischen den einzelnen Flügeln nicht erforderlich werden.

Weiter vorne ist bereits beschrieben worden, daß Schiffe deshalb nicht mehr so stark gefährdet sind, weil das eingefüllte Glaswollematerial das Öl und den sonstigen Treibstoff festhält und damit eine Schwimmhilfe bildet. Auch für Flugzeuge kann diese Schwimmhilfe dadurch erreicht werden, daß die gesamte Schiffswand oder die die Kabine umgebende Wand mit einem hochhydrophobierenden Bindemittel beschichteten Gitterwerk aus Glasfasern ausgefüllt ist, wobei in diese Bereiche ein entsprechendes die Tragfähigkeit erhöhendes Material beispielsweise auch Kerosin eingefüllt wird.

Zum schnelleren Austausch des Kerosins oder Treibstoffes aber auch zum schnelleren Befüllen und Entfüllen ist vorgesehen, daß das Behälterinnere über Doppelplatten unterteilt ist, die sich an den Tankwänden abstützend angeordnet und mit Auslaßöffnungen versehen und mit der Druckluft- oder Inertgasversorung verbunden sind. Damit kann von mehreren Stellen aus gleichzeitig Druckluft oder Inertgas eingedrückt werden, so daß der Entladevorgang bzw. der Transport zu den Triebwerken beschleunigt werden kann.

Die Erfindung zeichnet sich insbesondere dadurch aus, daß ein Sicherheitsbehälter für Flugzeuge, Schiffe, Gefahrengutbehälter und auch Tankfahrzeuge geschaffen ist, der bezüglich der Sicherheit über erhebliche Vorteile verfügt, wobei diese insbesondere darin zu sehen sind, daß ein gleichmäßiges Befüllen und Entleeren der einzelnen Behälter möglich ist. Durch das Gitterwerk aus Glasfasern in den Behältern ist dabei gleichzeitig die Möglichkeit gegeben, durch entsprechendes Eindrücken von Druckluft oder Inertgas an den entsprechenden Stellen die Behälter auch so gleichmäßig zu entladen, daß dadurch das Gleichgewicht beispielsweise des Luftfahrzeuges nicht beeinträchtigt wird. Gleichzeitig ist bei Tanks u. ä. durch ein Stützgerüst im Gitterwerk die Möglichkeit gegeben, den Entleerungsvorgang zu beschleunigen. Darüber hinaus kann auf die Zwischenwände entweder verzichtet oder sie können reduziert werden, so daß damit die Gewichtszunahme durch das Glasfasergewebe wieder aufgefangen werden kann. Als weitere Vorteile sind zu sehen, daß durch die eingefüllte Glasfaser eine Explosions- und Brandhemmung erreicht ist, die sich gerade bei Tankfahrzeugen, Schiffen und Flugzeugen vorteilhaft auswirkt. Darüber hinaus stellt das Gitterwerk in den Tanks sicher, daß bei einer Wasserung des Flugzeuges oder bei einem Leckwerden des Schiffes dieses beispielsweise nicht sinken kann, weil das Gitterwerk selbst in beschädigten Tanks dafür Sorge trägt, daß quasi eine Schwimmhilfe erzeugt wird. Dieser Mehrfacheffekt ist überraschend und als Technologiesprung zu bezeichnen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: ein Tankfahrzeug in Seitenansicht,
- Fig. 2: ein Tankfahrzeug im Schnitt,
- Fig. 3: ein Tankfahrzeug im Schnitt mit tiefergelegtem Tankraum,
- Fig. 4: einen stationären Tank in Seitenansicht,
- Fig. 5: mehrere in einen solchen Tank einschiebbaren Pakete aus Gitterwerk,
- Fig. 6: einen Schnitt durch den stationären Tank gem. Fig. 4 und mehrere Glasfasern im Schnitt,
- Fig. 7: einen weiteren stationären Tank im Schnitt,
- Fig. 8: einen Öltanker in Seitenansicht,
- Fig. 9: einen Öltanker im Schnitt,
- Fig. 10: mehrere Glasfasern im Schnitt,
- Fig. 11: einen für den Wasserstofftransport vorgesehenen Tanker in perspektivischer Darstellung,
- Fig. 12: einen Gefahrengutbehälter in perspektivischer Darstellung,
- Fig. 13: ein in die Wandung einschiebbares Paket aus Glasfasern,
- Fig. 14: mehrere Glasfasern im Schnitt,
- Fig. 15: einen Schnitt durch die Kammerwand,
- Fig. 16: ein Luftfahrzeug in perspektivischer Darstellung,
- Fig. 17: das aus Fig. 16 ersichtliche Luftfahrzeug, teilweise im Schnitt,
- Fig. 18: mehrere Glasfasern im Schnitt,
- Fig. 19: zu Paketen zusammengefaßte Glasfasern und
- Fig. 20: einen Kraftstofftank im Schnitt mit eingeschobenen Paketen aus Glaswolle.

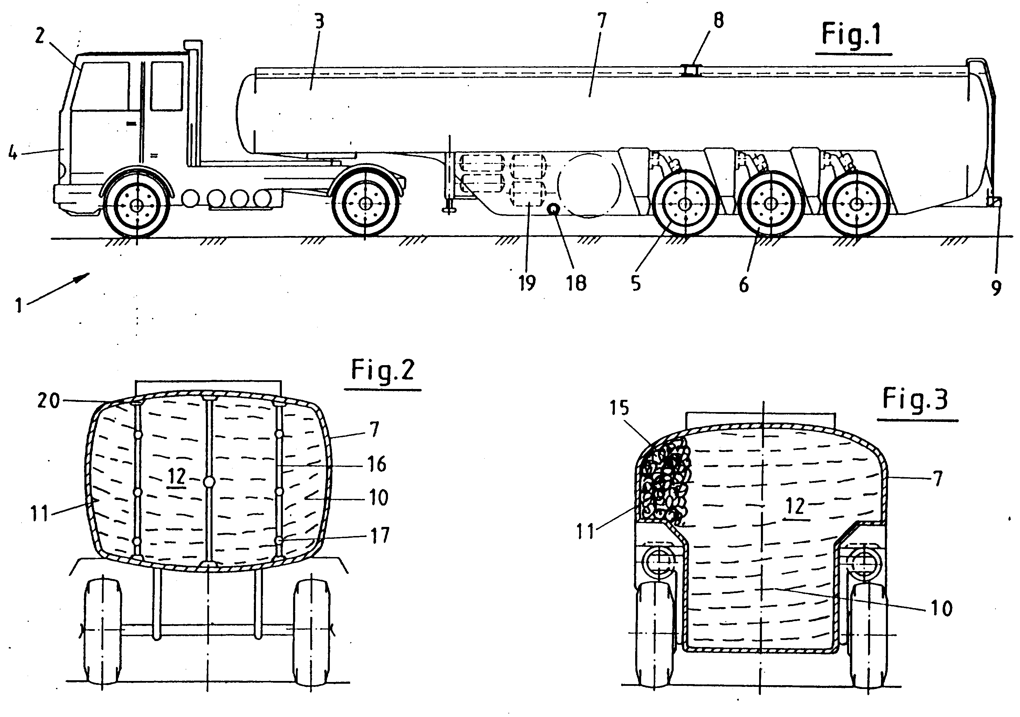

Fig. 1 zeigt einen Sicherheitsbehälter 1 hier in Form eines Tankfahrzeuges 1, bei dem Fahrerhaus 2 bzw. Zugmaschine 4 und Tanksattel 3 über einen einer Sattelplatte zugeordneten Zapfen miteinander verbunden sind.

Die Zugmaschine 4 kann mit ihren Rädern getrennt verfahren werden, während der gesamte Tanksattel 3 mit seinen Rädern 5, 6 nur aufgrund der Verbindung mit der Zugmaschine 4 zu verfahren ist. Derartige Tankfahrzeuge 1 und die Verbindung mit dem Tanksattel 3 sind bekannt.

Der Tanksattel 3 weist einen Behälter 7 mit einem großen Füllvolumen auf. Bei der Ausführung gem. Fig. 1 ist ein Behältervolumen von etwa 35 000 1 zu erreichen. Mit 8 ist eine Befülleinrichtung und mit 9 die Entleerungseinrichtung bezeichnet, über die der Behälterinhalt beeinflußt werden kann.

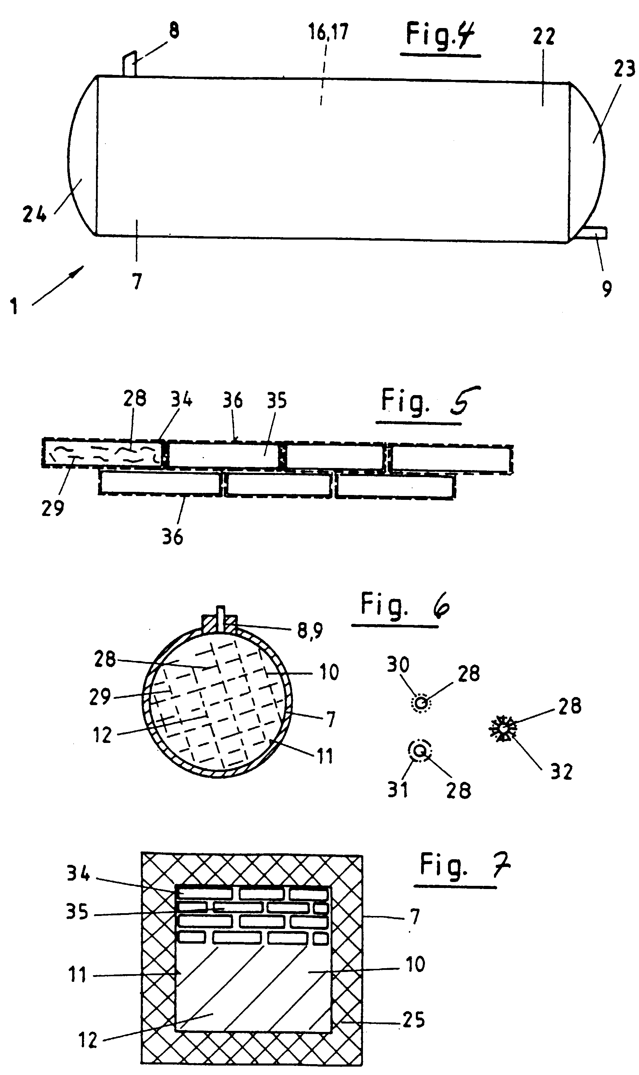

Fig. 2 zeigt einen Schnitt durch ein solches Tankfahrzeug in Höhe der Räder 5, 6, wobei in Fig. 2 ein übliches Tankfahrzeug 1 wiedergegeben ist und zwar eins mit relativ hochliegendem Schwerpunkt. Das gesamte Behälterinnere 10 dieses Tanksattels 3 bzw. Behälters 7 ist bis an die Behälterinnenwand 11 heranreichend mit Glaswolle 12 ausgefüllt.

Diese Glaswolle 12 ist durch entsprechende Behandlung mit einem Gemisch aus langkettiger Stärke und Silikon zu einem mattenförmigen Gitterwerk 15 geformt. Dieses mattenförmige Gitterwerk 15 stützt sich, wie Fig. 2 verdeutlicht, jeweils an der Behälterinnenwand 11 ab, so daß sie als solche immer die Bewegungen des Behälters 7 mitmachen muß.

Zur Stärkung des mattenförmigen Gitterwerks 15 insbesondere dann, wenn das Gitterwerk nur eine geringe Raumdichte von beispielsweise 18 kg/m³ oder weniger aufweisen soll, sind nach Fig. 2 Einbauten 14 vorgesehen. Diese Einbauten 14 bestehen aus Stützen 16, 17, die mit Fußplatten 20 versehen sind, um eine sichere Verbindung bzw. Abstützung an der Behälterinnenwand 11 zu erreichen. Die Einbauten aus den Stützen 16, 17 werden ergänzt durch rechtwinklig dazu verlaufende, hier nicht dargestellte Stützen, wobei die Fußplatten 20 beispielsweise so ausgebildet werden können, daß das Einschieben der gesamten Einbauten 14 einschließlich des Gitterwerks 15 von einer Seite des mehr oder weniger rohrförmigen Behälters 7 aus erfolgen kann. Damit kann der gesamte Inhalt einschließlich des mattenartigen Gitterwerkes 15 bei Bedarf auch aus dem Behälterinneren 10 ohne Probleme wieder entnommen und durch anderes Gitterwerk ersetzt werden.

Zur Erleichterung des Entleerungsvorganges sind an ein oder mehren Stellen Druckluftanschlüsse 18 vorgesehen, über die die Druckluft oder Inertgas in das Behälterinnere 10 eingeleitet werden kann. Soll Inertgas verwendet werden, so können Inertgasbehälter 19 insbesondere bei der fahrbaren Ausführung des Tankfahrzeuges nach Fig. 1 ohne weiteres am Fahrgestell angebracht werden. Das Inertgas wird aus dem Inertgasbehälter 19 über den Druckluftanschluß 18 in das Behälterinnere 10 eingeleitet und kann auch während des Befüllvorganges mit beispielsweise Benzin wieder in den Inertgasbehälter 19 zurückgepumpt werden, so daß es für einen neuen Entleerungsvorgang wieder zur Verfügung steht.

Der in Fig. 3 wiedergegebene Behälter 7 unterscheidet sich von dem gem. Fig. 2 dadurch, daß er weiter bis in den Bereich der Achsen heruntergezogen ist. Dies ist möglich, wenn eine entsprechend gabelförmige Ausbildung des Rahmens zum Einsatz kommt. Auch hier ist das Behälterinnere 10 mit Glaswolle 12 so ausgefüllt, daß sich ein insgesamt explosions- und auslaufsicheres Behältnis für solche flüssigen Kraftstoffe ergibt.

Der in den Figuren 4, 5 und Fig. 6 wiedergegebene Behälter entspricht dem gemäß Fig. 1, nur daß er stationär angeordnet ist und aus einem Rundkörper 22 besteht, der an beiden Enden eine Kopfplatte 23, 24 aufweist. Mit 8 und 9 sind die Befülleinrichtung und die Entleerungseinrichtung bezeichnet. Ein solcher Behälter kann beispielsweise einem Haus als Heizöltank dienen. In den Behälter 7 ist Glaswolle 12 eingefüllt (Fig. 6). Es ist auch möglich, die Glaswolle 12 zu Paketen 34, 35 zusammengefaßt in derartige Behälter einzufüllen (Fig. 5). Die Glasfasern 28, 29 sind dabei über das Bindemittel 30, 31, 32 so zusammenzufassen (Fig. 6, rechter Teil), daß sie die Pakete 34, 35 ergeben, Diese Pakete 34, 35 können auch über ein Glasflies 36 abgedeckt werden, um so die Stabilität des einzelnen Paketes 34, 35 zu erhöhen (Fig. 5).

Pakete 34, 35 werden dann beispielsweise gemäß Fig. 7 in das Behälerinnere eingeschoben und bilden eine vollständige Füllung. Schwallwände o. ä. werden hier absolut nicht mehr gebraucht, wenn die aus Fig. 1 und den Figuren 2 und 3 ersichtliche fahrbare Anordnung gewählt wird.

Fig. 6 zeigt auf der linken Seite das in das Behälterinnere eingeschobene Gesamt-Glaswollenpaket 12 und auf der rechten Seite mehrere Glasfasern 28, 29 mit unterschiedlicher Beschichtung. Das Bindemittel 30 besteht im wesentlichen aus Epoxyharz u. ä. wirkenden bzw. zusammengesetzten Harzen und das Bindemittel 32 aus Epoxyharz und Stärke, wobei je nach Einsatzfall der Anteil der Stärke auf 100 % gehen kann. Mit 31 ist ein Bindemittel aus Silikon und Stärke gekennzeichnet, wobei auch bei den anderen Bindemittel 30, 32 Silikon mitenthalten ist, um die einzelnen Fasern hydrophob zu machen.

Fig. 7 zeigt - wie schon erwähnt - eine Ausbildung, bei der Pakete 34, 35 mit oder ohne umgebenden Glasflies 36 in das Behälterinnere 10 eingeschoben sind. Dieser Behälter 7 verfügt darüber hinaus über einen Mantel aus Isoliermaterial 25, wenn beispielsweise das in den Behälter 7 eingefüllte Transportgut kühl gehalten werden soll.

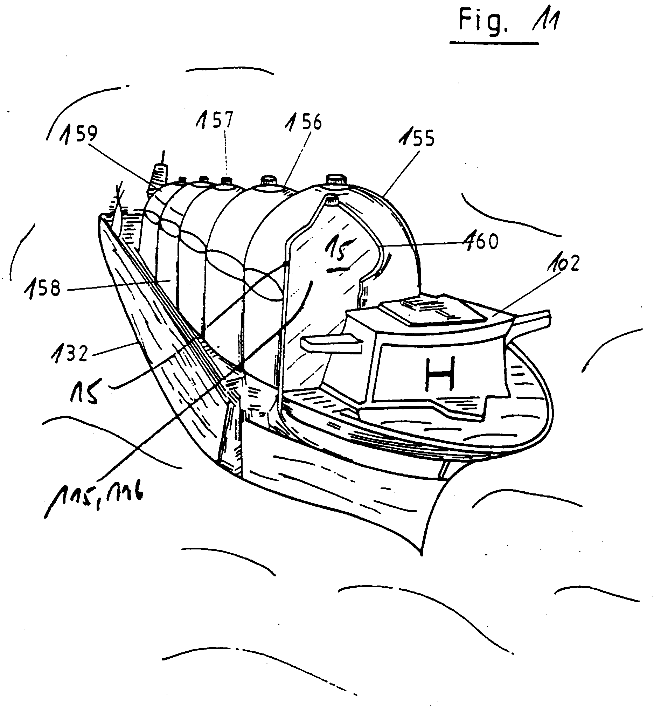

Fig. 8 zeigt einen Öltanker 101 der Phantasie-Tankerlinie Schiwo-Lines in Seitenansicht, wobei jeweils mit 102 sein Ruderhaus, mit 103 sein Bugraum und mit 104 sein Heckraum bezeichnet ist. Sowohl in seine Betriebsöltanks 105, 106 wie auch in seine Tankräume 108, 109 und seinen Kofferdamm 110 und in seine Tankräume 111 ist ein bis an die Innenwand 112 reichendes Gitterwerk 15 aus Glasfasern 28, 29 bzw. 115, 116 eingeschoben. Entsprechendes verdeutlicht Fig. 9 im Schnitt, wobei Fig. 10 die Glasfasern 115 aufzeigt, die mit unterschiedlichem Bindemittel 30, 31, 32 umhüllt sind.

Der Schnitt nach Fig. 9 zeigt ergänzend, daß bei den hier großen Räumen zweckmäßigerweise ein Traggerüst 118 mit den Glasfasern 115, 116 zusammen eingeschoben ist. Dieses Traggerüst 118 besteht aus Längsrohren 119 und Querrohren 120, wobei diese endseitig Platten 121 aufweisen, die sich an der Innenwand 112 des jeweiligen Tankraums 111 abstützen. Damit wird der gesamten Füllung des Tankraums 111 eine ausreichende Stabilität gegeben, wobei dies auch durch die auf der rechten Seite wiedergegebene Ausführung denkbar ist, wobei die einzelnen Glasfasern 115, 116 zu Paketen 145, 146 zusammengefaßt und durch Faserzwischenwände 150 oder Glasfaserstränge 151, 152 gehalten im Tankraum 111 angeordnet werden können. Da der Hauptbereich des Tankraums 111 sich unterhalb der Wasserlinie 132 befindet, ist die äußere Schiffswand 123 entsprechend stabil ausgebildet. Außerdem sind Zwischenwände 135, 136 vorgesehen, die aber keine solche Stabilität aufzuweisen brauchen. Die einzelnen Pakete 145, 146 aus Gitterwerk 15 sind auch im Bereich des Schiffstiefsten, d. h. der Bilsch 137 dort angeordnet, um hier ggf. mit Öl angereichertes Wasser bzw. Flüssigkeit aufzunehmen. Das Gitterwerk 15 führt dabei zu einer Selektion insofern, als nur das Öl aufgenommen wird, während das Wasser unverändert in der Bilsch 137 ansteht. Entsprechend ist es auch denkbar, im Bereich des Maschinenraums 107 den Boden mit solchem Gitterwerk 15 auszurüsten, so daß entsprechende Gefährdungen durch ausgetretenes Öl nicht auftreten können.

Fig. 11 zeigt eine besondere Ausführung eines Tankschiffes, das nämlich zum Transport von Wasserstoff vorgesehen ist. Dieser Wasserstoff wird in flüssiger Form also entsprechend gekühlt transportiert. Das Tankerschiff verfügt über Tanks 155, 156, 157, 158, 159, die durch einen entsprechend dicken Kühlmantel 160 umgeben sind, wobei sowohl der Kühlmantel 160 wie auch der Tankinnenraum der Tanks 155 bis 159 mit Glasfasern 115, 116 bzw. einem entsprechendem Gitterwerk 15 ausgefüllt sind. Dies führt zu erheblichen Erleichterungen, besseren Kühlleistungen und vor allem einer Absicherung der Umwelt, weil sichergestellt ist, daß auch bei eventuell auftretenden Unfällen eine Umweltgefährdung deshalb nicht eintreten kann, weil der flüssige Wasserstoff nicht plötzlich und schnell austritt, sondern nur sehr langsam, weil durch das Gitterwerk 15 aus Glasfasern 115, 116 Sauerstoff nur in geringen Mengen jeweils an das Gitterwerk 15 herankommen kann.

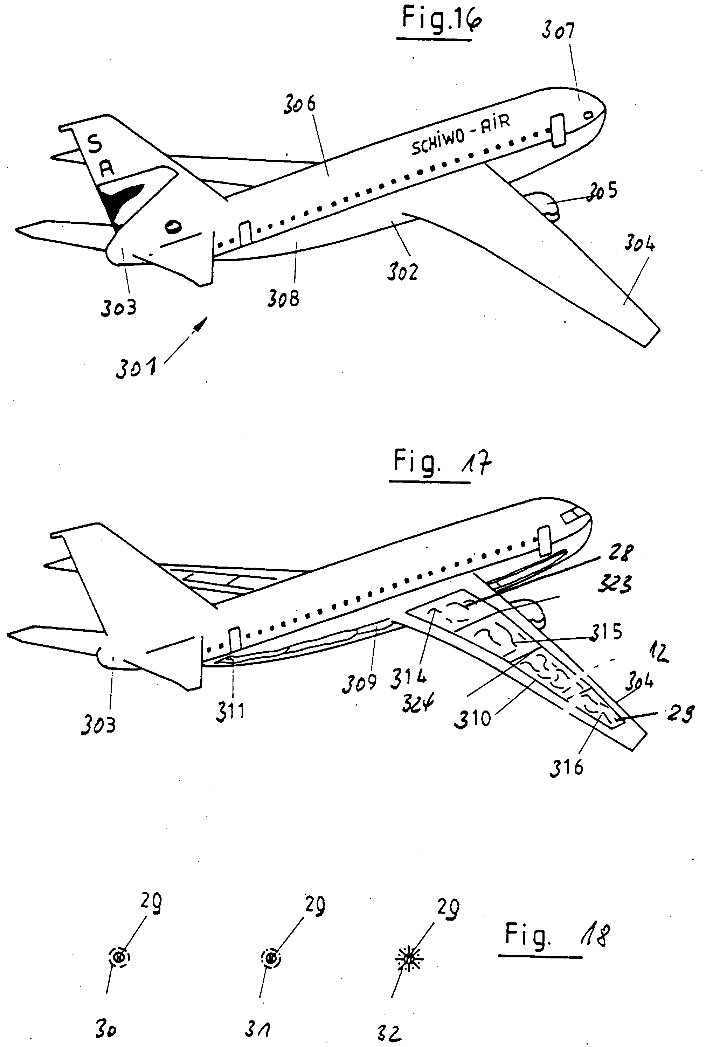

Gefahrengut 202 gemäß Fig. 12 wird sehr häufig mit besonderen Vorsichtsmaßnahmen auch über die Straßen oder per Luft oder per Schiff transportiert. Hier ist eine besondere Absicherung gemäß der Erfindung durch die aus Fig. 12 ersichtliche Ausführung möglich, wobei das Gefahrengut 202 nach Fig. 12 von einem Schutzmantel 203 umgeben ist. Zusätzlich ist ein Außenmantel 204 möglich, wobei ggf. beide eine Füllung aus Glaswolle 12 aufweisen. Diese Glaswolle 12 in Form des Gitterwerks 15 erbringt einen dichten und stabilen Mantel um das Gefahrengut 202, das hier in Tonnen 206, 207 gelagert ist, die sich auf der Innenwand 205 abstützen bzw. gegen diese anlehnen. Das Gitterwerk 12 kann in Form von Paketen 34, 35 vorgefertigt eingeschoben werden, wobei Fig. 13 ein solches Paket 34 verdeutlicht. Dieses Paket ist hier zusätzlich durch Längsrohre 119 und Querrohre 120 stabilsiert, die dann auch noch die Anbringung einer Tragöse 218 ermöglichen, um so die einzelnen Pakete leichter transportieren zu können. Aus den einzelnen Paketen 34, 35 wird dann der Schutzmantel 203, 204 gebildet, wobei Anschlußösen oder Befestigungsmittel vorgesehen werden können, um die einzelnen Pakete miteinander zu verbinden.

Fig. 12 und Fig. 15 zeigen eine besondere Ausführungsform insofern, als hier ein Doppelmantel bzw. eine Doppelkammer 214 vorgesehen ist. Dabei kann diese Doppelkammer 214 über einen Mantel 211 beispielsweise aus Glasflies abgedeckt sein oder aus Blech o. ä., wobei insbesondere zur Innenseite des Sicherheitsbehälters Löcher o. ä. vorgesehen sein sollen, um den Eintritt von ausgelaufenem Gefahrengut zu ermöglichen. Denkbar ist es hier auch, daß Emulsionen transportiert werden oder aber radioaktive Flüssigprodukte, die dann getrennt aufgefangen werden können, weil die innere Kammer 215 mit einem hydrophilen Gitterwerk 217 ausgefüllt ist, während die äußere Kammer 216 mit einem hydrophoben Gitterwerk bzw. hydrophob gemachten Gitterwerk 210 gefüllt ist. Dadurch nimmt die innere Kammer 215 wasserhaltige Produkte auf, während die äußere Kammer 216 ölhaltige und kohlenwasserstoffhaltige Produkte aufnimmt, ohne sie in die Umwelt eindringen zu lassen.

Fig. 14 zeigt wiederum mehrere Glasfasern 28, im Schnitt, die mit unterschiedlichen Bindemittel 30, 31, 32 beschichtet sind.

Fig. 16 zeigt ein Luftfahrzeug 301 der Phantasie-Fluggesellschaft SCHIWO-AIR, die sowohl im Rumpf 302 zwischen Heck 303 und Cockpit 307 mit Tanks ausgerüstet ist, wie auch in den Flügeln 304. Unterhalb der Flügel 304 sind die Antriebe 305 angeordnet. Sowohl im wie unterhalb des Laderaums 308 befinden sich die Rumpftanks 309, also unterhalb der Kabine 306, während im Heck 303 Hecktanks 311 vorgesehen sind und vor allem in den Flügeln die etwa 2/3 der gesamten Kerosinmenge aufnehmenden Flügeltanks 310.

Fig. 17 verdeutlicht, daß sowohl die Flügeltanks 310 wie auch die übrigen Tanks 309, 311 in Einzeltanks 314, 315, 316 unterteilt sind. Diese Einzeltanks 314, 315, 316 sind jeweils mit dem aus Glaswolle 12 bestehenden Gitterwerk 15 ausgefüllt, so daß das darin enthaltene Kerosin gegen Auslaufen gesichert ist, so daß auch eine Explosionsgefahr nicht mehr besteht. Dieses Gitterwerk 15 reicht jeweils bis an die Tankwände 323, 324 heran und füllt die gesamten Einzeltanks 314, 315, 316 aus.

Fig. 18 zeigt Glasfasern 29 im Schnitt, die wiederum wie schon mehrfach erwähnt mit unterschiedlichen Bindemitteln 30, 31, 32 umhüllt sind.

Die Einzeltanks 314, 315, 316 werden zweckmäßigerweise gemäß Fig. 19 mit Paketen 34, 35 aus Glaswolle 12 bzw. Gitterwerk 15 beschickt. Um ein Verrutschen dieser einzelnen Pakete 34, 35 zu vermeiden, die auch noch mit einem Glasflies 341 umhüllt sind, sind an ihren Seitenwänden 344, 345 Verbindungsteile 348, 349 vorgesehen. Die hier dargestellten Verbindungsteile 348, 349 arbeiten nach Art eines Druckknopfes.

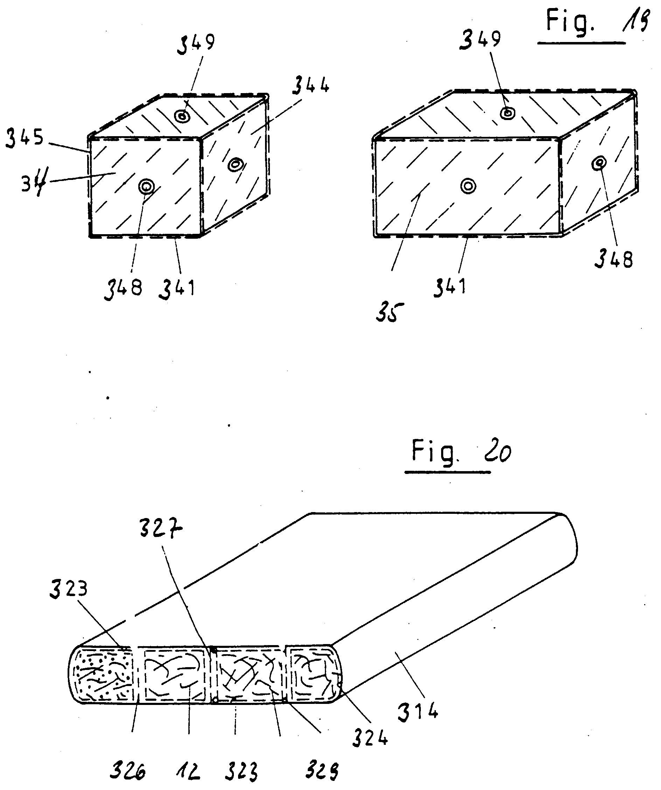

Fig. 20 schließlich zeigt einen solchen Einzeltank 314, in den die einzelnen Pakete 34, 35 eingeschoben sind. Verdeutlicht wird, daß der gesamte Innenraum vollständig durch die Glaswolle 12 ausgefüllt ist, wobei dazwischen Doppelplatten 326, 327 angeordnet sind, die endseitig mit Führungsteilen, hier beispielsweise Rollen versehen sind, um so ein Einschieben des integrierten Gitterwerks ggf. mit einem Traggerüst zu ermöglichen. Die Doppelplatten 326, 327 sind mit Auslaßöffnungen 329 versehen, um hierdurch Druckluft oder Inertgas ausströmen zu lassen und so den Entleerungsvorgang zu beschleunigen.

## Patentansprüche

1. Sicherheitsbehälter für die Lagerung und den Transport umweltgefährdender, insbesondere explosionsgefährlicher Stoffe wie Benzin, Öl, Wasserstoff und sonstige Kraftstoffe, bestehend aus einem langgezogenen, rundum geschlossenen Behälter (7), der über ins Behälterinnere (10) reichende Befüll- und Entleerungseinrichtungen (8, 9) bzw. -öffnungen verfügt, der mit Glaswolle (12) gefüllt ist und der in ein Transportfahrzeug (3, 4) eingebaut ist oder einem solchen zuzuordnen ist, wobei das Behälterinnere (10) ganz oder teilweise ausfüllt und/oder mit einer Schicht der Glaswolle umhüllt, ist, die zu einem mattenförmigen und dem Behälterinneren (10), den Behälterinnenwänden (11) oder Teilen des- bzw. derselben angepaßten Gitterwerk (15) geformt ist
**dadurch gekennzeichnet**,
daß die Glaswolle (12) im Hochtemperaturbereich geblasen worden ist, daß die Glaswolle (12) mit einem aus langkettiger Stärke (Polysacchariden) und/oder einem Epoxy- und/oder Methylonharz, Härter, Methylpolysilan und einem Staubbindemittel sowie Silikon (Silikonharz) bestehenden Bindemittel (30, 31, 32) beschichtet und schneidfähig ist.

2. Sicherheitsbehälter nach Anspruch 1,
**dadurch gekennzeichnet**,
daß das mattenartige Gitterwerk (15) in das Behälterinnere (10) eingespannt oder sich an dort positionierten aus Stäben oder aus Glasfasersträngen (151, 152) oder -wänden (150) bestehenden Stützen (16, 17) abstützend eingebracht und angeordnet ist.

3. Sicherheitsbehälter nach Anspruch 1,
**dadurch gekennzeichnet**,
daß das Behälterinnere (10) über die Befüll- und Entleerungseinrichtungen (8, 9) mit einem Druckluftanschluß (18) oder Inertgasanschluß bzw. Inertgasbehälter (19) verbunden ist.

4. Sicherheitsbehälter nach Anspruch 1,
**dadurch gekennzeichnet**,
daß die das Gitterwerk (15) bildende Glaswolle (12) mit 7 - 10 Gew.-% Bindemittel aus Silikon und Stärke oder Epoxyharz beschichtet und zu Platten oder Körpern mit einer Raumdichte (Rohdichte) von 18 bis 110 kg/m³, vorzugsweise 40 - 65 kg/m³ geformt ist.

5. Sicherheitsbehälter nach Anspruch 1,
**dadurch gekennzeichnet**,
daß die das Gitterwerk (15) bildende Glaswolle (12) von Glasfasern (Weichglaswolle) (115, 116) mit einem Faserdurchmesser von 3 - 7 µm besteht und daß das Gitterwerk zusammen mit den teleskopierbar ausgebildeten Stützen (16, 17) und diesen zugeordneten Fußplatten (20) in das Behälterinnere (10) eingeschoben ist.

6. Sicherheitsbehälter nach Anspruch 1 bis Anspruch 5,
**dadurch gekennzeichnet**,
daß die Glaswolle (12) und damit die sie bildenden Glasfasern (28, 29) paketweise mit einem dünnen Glasflies (36) oder aus Glasfasern bestehenden Bändern umgeben sind, wobei als Bindemittelzusatz Silan dem Epoxyharz oder gleich oder ähnlich wirkendem Harz zugegeben ist.

7. Sicherheitsbehälter nach Anspruch 1 bis Anspruch 6,
**dadurch gekennzeichnet**,
daß das Behälterinnere (10) von außen nach innen mit Gitterwerkslagen (15) sich verringernder Raumdichte (Rohdichte) gefüllt ist.

8. Sicherheitsbehälter nach Anspruch 1 bis Anspruch 7,
**dadurch gekennzeichnet**,
daß bei einem Öltanker (101) gemäß Fig. 8 das Behälterinnere (10) von Abteiltankräumen (108, 109, 111) und Betriebsöltanks (105, 106) sowie Kofferdämme (110) oder als Doppelwände ausgeführte Zwischenwände (135, 136) und der Boden einer Bilsch (137) mit dem mattenförmigen Gitterwerk (15) aus entsprechend ausgebildeter und beschichteter Glaswolle (12) ausgefüllt oder aufgefüllt ist.

9. Sicherheitsbehälter nach Anspruch 2,
**dadurch gekennzeichnet**,
daß die Stützen (16, 17) als Rohre (119, 120) ausgebildet, mit Querbohrungen versehen und mit der Befüll- und Entleerungseinrichtung (8, 9) verbunden sind.

10. Sicherheitsbehälter nach Anspruch 8,
**dadurch gekennzeichnet**,
daß die Öltanker gemäß Fig. 8 eine Schiffswand (123) aufweist, in der über nach außen zu öffnende Klappen verschlossene Barrierekammern angeordnet sind, in denen eine Schleudereinrichtung und eine Ölbarriere untergebracht ist, die aus zu Rollgitterglasmatten geformtem Gitterwerk (15) besteht.

11. Sicherheitsbehälter nach Anspruch 8,
**dadurch gekennzeichnet**,
daß die einzelnen Tanks (105, 106, 108, 109, 111) insbesondere Tanks (155, 156, 157, 158, 159)eines Schiffes gemäß Fig. 11 mit Paketen (145, 146) aus Glasfasern (115, 116) gefüllt sind und daß zusätzlich auch im die Tanks umgebenden Kühlmantel (160) Matten aus Glasfasern (115, 116) angeordnet sind.

12. Sicherheitsbehälter nach Anspruch 1 bis Anspruch 7,
**dadurch gekennzeichnet**,
daß das mit Gefahrengut (202) ganz oder teilweise ausgefüllte Behälterinnere (10) eines Behälters (1) gemäß Fig. 12 von einem Schutzmantel (203) oder einem zusätzlichen Außenmantel (204) umgeben ist, der aus dem Gitterwerk (15) besteht oder dieses von einem Blech-, Kunststoff- oder Glasfasermantel (211) umgeben beinhaltet ist, wobei der Mantel (211) auf der Gefahrengutseite perforiert ist.

13. Sicherheitsbehälter nach Anspruch 12,
**dadurch gekennzeichnet**,
daß der Schutz- oder Außenmantel (203, 204) eine Doppelkammer (214) aufweist, wobei eine dem Gefahrengut (202) zugewandte Kammer (215) mit einem hydrophil gemachten Gitterwerk (217) und die äußere Kammer (216) mit einem hydrophob gemachten Gitterwerk (210) gefüllt ist.

14. Sicherheitsbehälter nach Anspruch 1 bis Anspruch 7,
**dadurch gekennzeichnet**,
daß das Behälterinnere (10) eines Rumpftankes (309) eines entpsrechenden Flugzeuges (301) gemäß Fig. 16. 17 sowohl in Richtung Cockpit (307) wie auch in Richtung Heck (303) verlängert und wie auch alle Flügeltanks (310) mit dem mattenförmigen Gitterwerk (15) aus entsprechend ausgebildeter und beschichteter Glaswolle (12) ausgefüllt sind, die zwischen den Tankwänden (323, 324) mit einer Raumdichte von 45 - 55 kg/m³ eingespannt angeordnet ist.

15. Sicherheitsbehälter nach Anspruch 8 oder Anspruch 14,
**dadurch gekennzeichnet**,
daß die gesamte Schiffswand (123) oder die die Kabine (305) umgebende Wand mit einem hochhydrophobierenden Bindemittel (30 - 32) beschichteten Gitterwerk (15) aus Glasfasern (28, 29) ausgefüllt ist.

16. Sicherheitsbehälter nach Anspruch 14,
**dadurch gekennzeichnet**,
daß das Behälterinnere (10) über Doppelplatten (326, 327) unterteilt ist, die sich an den Tankwänden (323, 324) abstützend angeordnet und mit Auslaßöffnungen (329) versehen und mit der Druckluft- oder Inertgasversorung verbunden sind.

## Claims

1. Safety tank for the storage and transportation of environmentally dangerous, in particular explosive substances such as petrol, oil, hydrogen and other fuels, consisting of an elongated tank (7) which is closed all round, which has filling and emptying devices (8, 9) or openings extending into the inside of the tank (10), which is filled with glass wool (12) and which is installed in a transport vehicle (3, 4) or is to be associated with such a vehicle, the inside of the tank (10) being completely or partly filled and/or encased with a layer of the glass wool which is formed into a mat-like lattice-work (15) adapted to the inside of the tank (10), the inner walls (11) of the tank or parts thereof, characterised in that the glass wool (12) has been blown in the high temperature range, that the glass wool (12) is coated with a binding agent (30, 31, 32) consisting of long-chain starch (polysaccharides) and/or an epoxy and/or methylone resin, hardeners, methylpolysilane and a dust-trapping agent as well as silicone (silicone resin) and which can be cut.

2. Safety tank according to Claim 1, characterised in that the mat-like lattice-work (15) is fixed in the inside of the tank (10) or is introduced and arranged to be supported on supports (16, 17) positioned there and consisting of bars or of glass fibre rods (151, 152) or walls (150).

3. Safety tank according to Claim 1, characterised in that the inside of the tank (10) is connected by way of the filling and emptying devices (8, 9) to a compressed air connection (18) or inert gas connection or inert gas container (19).

4. Safety tank according to Claim 1, characterised in that the glass wool (12) forming the lattice-work (15) is coated with 7-10% by weight binding agent consisting of silicone and starch or epoxy resin and is formed as sheets or bodies with a volumetric density (gross density) of 18 to 110 kg/m³, preferably 40-65 kg/m³.

5. Safety tank according to Claim 1, characterised in that the glass wool (12) forming the lattice-work (15) consists of glass fibres (soft glass wool) (115, 116) with a fibre diameter of 3-7 µm and that the lattice-work together with the telescopically constructed supports (16, 17) and base plates (20) associated with the latter is inserted in the inside of the tank (10).

6. Safety tank according to Claim 1 to Claim 5, characterised in that the glass wool (12) and thus the glass fibres (28, 29) forming it are encased in the form of packages by a thin glass fleece (36) or bands consisting of glass fibres, silane being added as a binding agent additive to the epoxy resin or resin having the same or similar action.

7. Safety tank according to Claim 1 to Claim 6, characterised in that the inside of the tank (10) is filled from the outside inwards with layers of lattice-work (15) of decreasing volumetric density (gross density).

8. Safety tank according to Claim 1 to Claim 7, characterised in that in the case of an oil tanker (101) according to Figure 8, the inside of the tank (10) of compartmentalised tank chambers (108, 109, 110) and operating oil tanks (105, 106) as well as bulkheads (110) or intermediate walls (135, 136) constructed as double walls and the bottom of a bilge (137) is filled with the mat-like lattice-work (15) of correspondingly constructed and coated glass wool (12).

9. Safety tank according to Claim 2, characterised in that the supports (16, 17) are constructed as tubes (119, 120), are provided with transverse bores and are connected to the filling and emptying device (8, 9).

10. Safety tank according to Claim 8, characterised in that the oil tanker according to Figure 8 has a ship's wall (123), in which are located barrier chambers closed by way of flaps to be opened towards the outside, in which chambers a centrifugal device and an oil barrier is located, which consists of lattice-work (15) formed as rolled lattice glass mats.

11. Safety tank according to Claim 8, characterised in that the individual tanks (105, 106, 108, 109, 111) in particular tanks (155, 156, 157, 158, 159) of a ship according to Figure 11 are filled with packages (145, 146) of glass fibres (115, 116) and that by way of addition mats of glass fibres (115, 116) are also located in the cooling jacket (160) surrounding the tanks.

12. Safety tank according to Claim 1 to Claim 7, characterised in that the inside of the tank (10) of a tank (1) according to Figure 12 completely or partly filled with dangerous material (202) is surrounded by a protective jacket (203) or an additional outer jacket (204), which consists of the lattice-work (15) or contains the latter surrounded by a sheet-metal, synthetic material or glass fibre jacket (211), the jacket (211) being perforated on the dangerous material side.

13. Safety tank according to Claim 12, characterised in that the protective or outer jacket (203, 204) has a double chamber (214), a chamber (215) facing the dangerous material (202) being filled with a lattice-work (217) made hydrophilic and the outer chamber (216) being filled with a lattice-work (210) made hydrophobic.

14. Safety tank according to Claim 1 to Claim 7, characterised in that the inside of a tank (10) of a body tank (309) of a corresponding aircraft (301) according to Figures 16, 17 is extended both in the direction of the cockpit (307) as well as in the direction of the tail (303) and like all the wing tanks (310) is filled with the mat-like lattice-work (15) of correspondingly constructed and coated glass wool (12), which is fixed between the tank walls (323, 324) with a volumetric density of 45-55 kg/m³.

15. Safety tank according to Claim 8 or Claim 14, characterised in that the entire ship's wall (123) or the wall surrounding the cabin (305) is filled with a lattice-work (15) of glass fibres (28, 29), which lattice-work is coated with a binding agent (30-32) having a high water-repellent action.

16. Safety tank according to Claim 14, characterised in that the inside of the tank (10) is divided by way of double plates (326, 327), which are arranged supported on the tank walls (323, 324), are provided with outlet openings (329) and are connected to the compressed air or inert gas supply.

## Revendications

1. Réservoir de sécurité pour le stockage et le transport de produits constituant un risque pour l'environnement, en particulier explosifs, tels qu'essence, hydrocarbures, hydrogène et autres carburants, constitué d'un réservoir (7) allongé, fermé de tous côtés, qui est pourvu de dispositifs de remplissage et de vidange (8, 9) ou d'ouvertures de remplissage et de vidange, s'étendant vers l'intérieur (10) du réservoir, qui est rempli de laine de verre (12) et qui est monté dans un véhicule de transport (3, 4) ou doit être associé à un tel véhicule, l'intérieur (10) du réservoir étant totalement ou partiellement rempli et/ou enveloppé d'une couche de laine de verre, qui a la forme d'un grillage (15) en treillis et adapté à l'intérieur (10) du réservoir, aux parois intérieures (11) du réservoir ou à des parties de celui-ci ou de celles-ci,
caractérisé
en ce que la laine de verre (12) a été soufflée dans une plage de hautes températures, en ce que la laine de verre (12) est enduite d'un liant (30, 31, 32), constitué d'un amidon à longue chaîne (polysaccharides) et/ou d'une résine époxy et/ou d'une résine de méthylone, de durcisseurs, de méthylpolysilane et d'un liant de poussières ainsi que de silicone (résine silicone) et peut être coupée.

2. Réservoir de sécurité selon la revendication 1,
caractérisé
en ce que le grillage (15) du type d'un treillis est tendu à l'intérieur (10) du réservoir ou est introduit et placé de manière à s'appuyer contre des supports (16, 17), positionnés à cet endroit, constitués de barres et/ou de fils de fibres de verre (151, 152) ou de parois de fibres de verre (150).

3. Réservoir de sécurité selon la revendication 1,
caractérisé
en ce que l'intérieur (10) du réservoir est relié, par les dispositifs de remplissage et de vidange (8, 9), à un raccord d'air comprimé (18) ou un raccord de gaz inerte ou un réservoir de gaz inerte (19).

4. Réservoir de sécurité selon la revendication 1,
caractérisé
en ce que la laine de verre (12) formant le grillage (15) est enduite de 7 à 10 % en poids de liant fait de silicone et d'amidon ou de résine époxy et est formée en plaques ou corps d'une densité volumique (masse volumique apparente) de 18 à 110 kg/m³, de préférence de 40 à 65 kg/m³.

5. Réservoir de sécurité selon la revendication 1,
caractérisé
en ce que la laine de verre (12), formant le grillage (15), est constituée de fibres de verre (laine de verre souple) (115, 116) avec un diamètre de fibres de 3 à 7 µm et en ce que le grillage est introduit à l'intérieur (10) du réservoir avec les supports (16, 17) télescopiques et des plaques de pied (20), associées à ceux-ci.

6. Réservoir de sécurité selon les revendications 1 à 5,
caractérisé
en ce que la laine de verre (12) et donc les fibres de verre (28, 29) la formant sont entourées à la manière d'un paquet par un mince voile de verre (36) ou par des bandes constituées de fibres de verre, à la résine époxy étant ajouté, comme additif, du silane ou une résine similaire ou agissant de manière similaire.

7. Réservoir de sécurité selon les revendications 1 à 6,
caractérisé
en ce que l'intérieur (10) du réservoir est rempli, de l'extérieur vers l'intérieur, de couches de grillage (15) de densité volumique (masse volumique apparente) décroissante.

8. Réservoir de sécurité selon les revendications 1 à 7,
caractérisé
en ce que, dans le cas d'un réservoir d'hydrocarbures (101) selon la figure 8, l'intérieur (10) de compartiments de réservoir (108, 109, 111) et de réservoirs d'hydrocarbures pour le fonctionnement (105, 106) ainsi que de batardeaux (110) ou de cloisons intermédiaires (135, 136) réalisées à double paroi et le fond d'une cale (137) est rempli avec le grillage (15) en treillis fait de laine de verre (12) conformée et enduite en conséquence.

9. Réservoir de sécurité selon la revendication 2,
caractérisé
en ce que les supports (16, 17) sont conformés en tubes (119, 120), sont pourvus de perçages transversaux et sont reliés au dispositif de remplissage et de vidange (8, 9).

10. Réservoir de sécurité selon la revendication 8,
caractérisé
en ce que le pétrolier selon la figure 8 présente une paroi de navire (123) dans laquelle sont prévues des chambres de barrière, fermées par des clapets s'ouvrant vers l'extérieur, dans lesquelles sont logés un dispositif centrifuge et une barrière d'huile, qui est constituée d'un grillage (15) sous la forme de mats de verre en rouleau.

11. Réservoir de sécurité selon la revendication 8,
caractérisé
en ce que les différents réservoirs (105, 106, 108, 109, 111), en particulier réservoirs (155, 156, 157, 158, 159) d'un navire selon la figure 11, sont remplis de paquets (145, 146) de fibres de verre (115, 116) et en ce qu'en outre sont placés aussi dans l'enveloppe de refrigération (160), entourant les réservoirs, des mats de fibres de verre (115, 116).

12. Réservoir de sécurité selon les revendications 1 à 7,
caractérisé
en ce que l'intérieur (10) d'un réservoir (1) selon la figure 12, totalement ou partiellement rempli d'un produit dangereux (202), est entouré d'une enveloppe de protection (203) ou d'une enveloppe extérieure supplémentaire (204), qui est constituée du grillage (15) ou celui-ci est entouré par une enveloppe de tôle, de matière synthétique ou de fibres de verre (211), l'enveloppe (211) étant perforée sur le côté du produit dangereux.

13. Réservoir de sécurité selon la revendication 12,
caractérisé
en ce que l'enveloppe de protection ou enveloppe extérieure (203, 204) présente une double chambre (214), comprenant une chambre (215), tournée vers le produit dangereux (202), remplie d'un grillage (217) rendu hydrophile et une chambre extérieure (216) remplie d'un grillage (210) rendu hydrophobe.

14. Réservoir de sécurité selon les revendications 1 à 7,
caractérisé
en ce que l'intérieur (10) d'un réservoir de fuselage (309) d'un avion (301) correspondant selon les figures 16 et 17 est prolongé tant dans la direction du cockpit (307) que dans la direction de l'arrière (303) et, comme tous les réservoirs d'aile (310), est rempli avec le grillage (15) en forme de mat fait de laine de verre (12) conformée et enduite en conséquence, qui est tendue entre les parois (323, 324) des réservoirs avec une densité volumique de 45 à 55 kg/m³.

15. Réservoir de sécurité selon la revendication 8 ou 14,
caractérisé
en ce que l'ensemble de la paroi de navire (123) ou la paroi entourant la cabine (305) est rempli avec un grillage (15) en fibres de verre (28, 29), enduit d'un liant (30 à 32) très hydrophobe.

16. Réservoir de sécurité selon la revendication 14,
caractérisé
en ce que l'intérieur de réservoir (10) est divisé par des doubles plaques (326, 327), qui prennent appui contre les parois (323, 324) du réservoir et sont pourvues d'ouvertures d'évacuation (329) et reliées avec l'alimentation en air comprimé ou en gaz inerte.
